(19) Europäisches Patentamt
European Patent Office
Office européen des brevets

(11) Publication number: 0 378 431 A1

(12) EUROPEAN PATENT APPLICATION

(21) Application number: 90300354.9

(51) Int. Cl.$^5$: A01M 1/20

(22) Date of filing: 12.01.90

(30) Priority: 13.01.89 US 296747
19.04.89 US 340287
19.04.89 US 340286

(43) Date of publication of application:
18.07.90 Bulletin 90/29

(84) Designated Contracting States:
GR

(71) Applicant: E.I. DU PONT DE NEMOURS AND COMPANY
1007 Market Street
Wilmington Delaware 19898(US)

(72) Inventor: Foster, James Perry
14 Blackrock Road
Chadds Ford Pennsylvania 19317(US)
Inventor: Jennings, Philip Vaughan
174 Fairhill Drive
Wilmington Delaware 19808(US)

(74) Representative: Hildyard, Edward Martin et al
Frank B. Dehn & Co. European Patent Attorneys Imperial House 15-19 Kingsway
London WC2B 6UZ(GB)

(54) Device for killing insects.

(57) A device for killing insects, the device selected from the group consisting of:

(I) a device comprising a sloped target area containing a toxin, the device being devoid of any insect containment cavity;

(II) a device comprising a toxin-containing element which is substantially completely accessible and visible to target insects and a protective mesh covering said toxin-containing element; and

(III) a device comprising a toxin-containing target (1) and a reservoir (3) closable with said target (1), the toxin being an insecticidally effective amount of a tetrahydro-2-(nitromethylene)-2H-1,3-thiazine.

Fig. 9

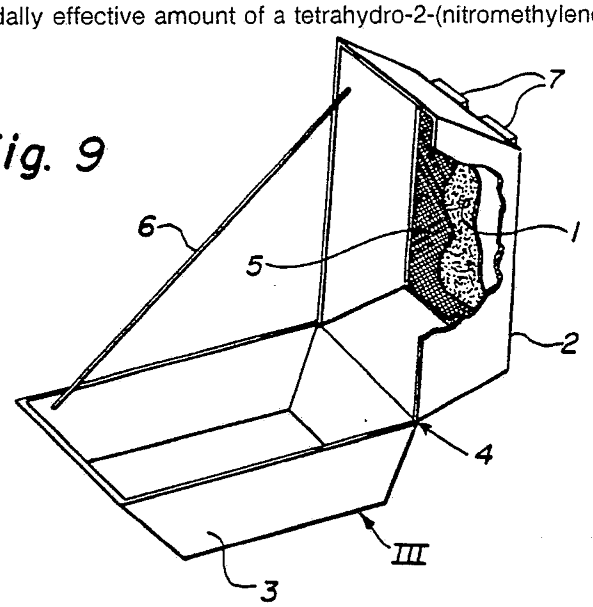


EP 0 378 431 A1

Xerox Copy Centre

# DEVICE FOR KILLING INSECTS

## BACKGROUND OF THE INVENTION

This invention concerns a device for killing insects, especially flying insects, and most especially flies. For the sake of brevity, the description provided hereafter will refer to the device primarily in its capacity to kill flies.

Certain 2-(nitromethylene)-1,3-thiazines and derivatives thereof are disclosed in U.S. Patents 3,993,648, 4,501,742 and 4,065,560 as having useful insecticidal activity against the house fly (Musca domestica). The insecticidal activity of tetrahydro-2-(nitromethylene)-2H-1,3-thiazine (TNMT) and other nitromethylene heterocycles are disclosed in Pesticides and Venom Neurotoxicity, Shankland et al., pages 153 to 169 (1978).

There are myriad patent disclosures of fly traps going back over one hundred years. One of the more recent patents on this subject matter is U.S. 4,310,985 which discloses an embodiment of insect trap with respect to which Device I (defined hereafter) represents an improvement.

One primary distinction enjoyed by the devices of this invention over earlier flytraps is that the toxic areas of the instant devices are almost completely accessible and visible to target insects. This results in much greater efficiency in killing the target insects. The devices are also much simpler in design than earlier flytraps, and there is no need for housing or other structural components for the devices to be operative, or the devices can simply be discarded after use. There is no necessity to lure the target insects into an inner chamber or to entice them to any one portion of the toxin-containing surface.

## SUMMARY OF THE INVENTION

This invention concerns an improved device for killing insects selected from the group consisting of:

(I) a device comprising:

(a) a sloped and porous target area which is fluid-permeable and self-supporting, and

(b) an optional base section, one having no insect-containment cavity, whereby the target area continuously sheds dead insects to prevent occlusion of the target area;

(II) a device comprising:

(a) a toxin-containing element, and

(b) a mesh covering toxin-containing element (a) to protect nontarget organisms from contact with the toxin; and

(III) a device comprising:

(a) a toxin-containing target with an optional mesh covering and an optional attractant for the insects; and

(b) a reservoir closable with the target so that the target is not exposed and openable so that the target is exposed, the reservoir serving to hold insects killed by contact with the target, components (a) and (b) being movable in relation to one another; the toxin employed in each of Devices I, II and III being an effective amount of a tetrahydro-2-(nitromethylene)-2H-1,3-thiazine.

The devices of this invention are particularly effective in killing flies in areas experiencing very high levels of fly populations, such as dairy barns, chicken houses or other confined animal quarters. Individual devices have been found effective in killing in excess of 25,000 flies per day. To simplify discussion of the devices and their uses, the descriptions provided hereafter will be confined to "flies" with the understanding that they are applicable to other insects as well. This invention also concerns a method for controlling insect infestations employing the devices of this invention.

The devices may also contain an insect lure which is at least partially water-soluble or soluble in a water-miscible solvent. Other optional features comprise: a flush (preferred) or close-fitting grill over the target area; a refillable aqueous liquid-containing reservoir; an insect pheromone or other attractant; and an insect food. Additional details concerning TNMT physical and chemical properties, pheromones, and other attractants are provided after the Examples.

Preferred features of Device I comprise a self-supporting target area of about 100 $cm^2$ or greater whose surface has a downward slope of at least about 30°; use of an insect sex lure, which can be muscalure or other pheromone, releasable upon contact with water; and, finally, any fluid in the optional base reservoir is

in contact with a material that wicks it to the surface target area.

Device II of this invention is characterized in that substantially all surfaces contain effective amounts of an insecticidally active toxin in a toxin-containing element, said element being freely accessible to, and visible by, target insects. There is a relatively open-mesh covering whose primary purpose is to protect nontarget organisms from contact with the toxin. The covering can also serve as a substrate for attractants including sex attractants, food and the like which will attract insects to the surface of the device thus maximizing the effect of the device in controlling them.

For the sake of simplicity, the covering will be referred to as a "mesh" it being understood that said term encompasses any geometric shape or design that will accomplish the purpose of protecting non-target organisms from contact with the toxin. Although not necessary to the primary function of the device, the mesh does provide an important measure of safety. The mesh can be woven in the shape of a grid, lattice or an open lace. Alternatively, the safety feature can be met by a series of short protuberances or spars protruding from the target surface with the toxin nestled in the valleys therebetween, or by a series of depressions which hold the toxin with the higher surface plateau serving to prevent contact with the toxin. There are numerous other possibilities, including an embossed surface, consistent with the caution that the mesh should not interfere in any substantial way with the inclination of the insect to feed at the toxic surface(s) and that it should not trap dead insects. The term "mesh" is intended to cover these and any other means of preventing contact with the toxin that will readily occur to one skilled in the art.

Device III of this invention is characterized in that, when the container is open, element (a), which contains an effective amount of an insecticidally active toxin, is freely accessible to, and visible by, target insects. There is an optional relatively open-mesh covering for the target surface whose primary purpose is to protect nontarget organisms from contact with the toxin. The covering can also serve as a substrate for attractants including sex attractants, pheromones, food and the like which will attract insects to the surface of the device thus maximizing the effect of the device in controlling them. Element (b) is usually the housing or cover for the device when it is closed. When open, element (b) serves as the reservoir for dead insects. Figures 9 to 12 show two typical embodiments of this invention: wherein element (b) is slidably adapted to enclose target element (a) with its safety mesh covering, and wherein the relation of (a) and (b) is such that they close like jaws. In each embodiment, there is an appropriate volume of element (b) to hold dead insects pending discard of the device with its contents.

Representative of the insects against which the devices of this invention have been found most effective are flies of the family Musca, including the house fly (Musca domestica) and the bush fly (Musca vertustissima), as well as flies of other families, such as the blow fly (Calliphora vomitoria), the fruit fly (Drosophila melanogaster), the stable fly (Stromoxys calcitrans) and the little house fly (Fannia spp).

The house fly is believed to activate its feeding mechanism after receiving appropriate stimuli via chemoreceptors believed to exist on its tarsi or feet. The feeding mechanism then involves a process wherein the fly lowers its proboscis to the surface upon which it has landed, expels saliva through the proboscis and finally sucks back whatever solution results. This process is believed to be virtually automatic when the fly lands on an appropriate surface. By this mechanism, a fly landing on the target area of the device described herein will ingest a lethal dose of toxicant and roll off the sloped target area leaving room for subsequent victims.

The preferred toxicant is tetrahydro-2-(nitromethylene)-2H-1,3-thiazine (TNMT) and agriculturally suitable salts thereof. Also preferred is the N-formyl derivative of TNMT. Additional details on preparation of toxicants can be found in U.S. Patents 3,993,648, 4,501,742 and 4,065,560. The high water solubility of TNMT at room temperature promotes the fast takeup of a lethal dose by the flies when feeding and facilitates operation of the trap. The compound is nonvolatile in ordinary use, therebyreleasing no harmful vapors to the atmosphere. Flies are readily attracted to feed on the device, since TNMT has little or no repellancy toward the insects. When the toxicant is used as described in the present invention, the devices are effective for several months so long as they are not exposed to inordinate amounts of direct sunlight. Finally, while TNMT is highly active against insects, it is much less so toward higher animal forms such as rats, rabbits and other mammals. This low mammalian toxicity contributes to utility of the device and its suitability for widespread use without undue danger to people, animals or other nontarget organisms.

## BRIEF DESCRIPTION OF THE DRAWINGS

Figure 1 is a front elevation of the arthropod-killing Device I with optional base.

Figure 2 is a vertical cross-sectional view of the Device I depicted in Figure 1.

Figure 3 is a fragmentary enlarged view of a cross-section of the downward-sloping lid of the Device I depicted in Figure 2.

Figure 4 is a front elevation of the Device I without optional base.

Figure 5 is a front elevation of the insect-killing Device II with a solid core target area.

Figure 6 is of a cross-section taken along line 2-2 of the Device II depicted in Figure 5.

Figure 7 is a fragmentary enlarged side layer-view of a cylindrical, hollow core embodiment of the Device II of this invention designed to present a wet target area to the fly.

Figure 8 is a cross-section taken along line 4-4 of the Device II depicted in Figure 7. The cross-section shows a separate dispenser layer intermediate the core and the mesh.

Figure 9 is a side cross-section of the insect-killing Device III with a hinged lid target area/reservoir closure system.

Figure 10 is a horizontal cross-section of the Device III depicted in Figure 9.

Figure 11 is a sectional front elevation of the Device III of this invention designed with a sliding lid/reservoir closure system.

Figure 12 is a horizontal cross-section along line 4-4 of the Device III depicted in Figure 11 showing an adhesive strip for mounting.

## DETAILS OF THE INVENTION

The following details can be understood most conveniently by reference to Figures 1 to 4, which relate to the Device I. The target area, 3, of the Device I, can be composed of any porous material such as felt, muslin, cloth, or blotter paper. The target is preferably white in dimly lit areas with a darkened background, or, black surrounded by white in brightly lit or light background locations. Maximum contrast between the target area and adjacent surroundings is most effective. The target area can be of any size but preferably its surface area is greater than 100 square centimeters. The surface should be sloped sufficiently downward so that the intoxicated flies roll off to provide continuous access to the target area by newly arriving flies. The target area can be curved or slanted or its sides can meet in a point. Its vertical cross-section can range from a triangular to a semi-circular or slightly rounded configuration. A target area with curved sides, e.g., having a semi-circular or semi-elliptical vertical cross-section forming an angle of at least about 30 degrees around its perimeter is especially preferred.

The target area can be covered with a closely-fitting or flush grill, 5. The grill should allow contact by the flies on the target area and therefore will contain openings of a size sufficient to permit the flies to land and feed on the target area surface. However, the main function of the grill is to prevent accidental contact of the target area by humans and domestic pets and the grill openings are suitably limited to a size which accomplishes this function. Furthermore, the thickness of the grill is suitably limited such that the depth of the openings will allow a fly standing on the highest portion of the grill to reach and ingest some of the toxicant on the target area surface and not interfere with the shedding of intoxicated flies. A grill with openings at least two millimeters on a side and one millimeter thick is preferred. The color of the grill is most preferably the same color as the target area.

The target area need not be covered with a grill to prevent accidental contact of the toxicant by humans and animals, although it is preferred. Alternatively, the target area can be embossed to form wells, grooves, channels, and the like, whereby the toxicant can be recessed to prevent accidental contact by humans and animals.

The perimeter of the target area is optionally surrounded by a hollow base section, 1, having a bottom and side or sides. Preferably, the side or sides of the base section will extend up to the level of the lowest portion of the target area. A bond or collar, 2, is conveniently employed between the base section and the target area to facilitate the shedding of dead insects from the target area. Optionally, the upper portion of the side or sides of the base section can bend inward to form a lip to provide additional support to the self-supporting target area.

The base section can be constructed from a variety of materials including paper and polymers such as polyolefins. The preferred materials are water-proof paper or other biodegradable materials. The base section is preferably of a shape which would allow the device as a whole to be free-standing on level surfaces. Its configuration is preferably box-shaped, rectangular or cylindrical, with a cylindrical configuration preferred. The base section can optionally include a means of suspending the device (not shown). The base section can be of the same or similar color as the target area or embossed with contrasting vertical lines and/or representations of standing flies since these are believed to aid in attracting flies to the device. The base section is attached to the sloped target area by means of bond, 2, such that a refillable fluid

reservoir is formed. This fluid reservoir is defined on its top by the bottom of the target surface and on its bottom by the bottom of the base section.

There may extend upward from the bottom of the base section an interior wall or walls (not shown) of the same configuration as the lowermost perimeter of the target area such that the fluid in the reservoir is held without leaking. It is contemplated that when an interior wall is employed, it will act as the inside boundary for the wicking material that will be nestled between the inside boundary and the container, in contact with whatever fluid may be employed.

The manner in which the fluid reservoir is filled can vary. A resealable inlet or portal through which liquid is added may be provided for in a side or sides of the base section although this embodiment is not depicted in the drawings. The manner in which the inlet or portal is resealable is not critical; an item which prevents the fluid from evaporating or leaking out of said inlet or portal, such as a cork, stopper or detachable panel, is preferred. Water is the fluid of choice; the fluid should contain at least some proportion of water so that a solution of the water soluble insecticide results on the target area. Other fluids, such as glycerine can also be added. The amount of water added to the fluid reservoir can vary; preferably, the amount is 1 liter or greater and is at least sufficient to keep the surfaces of the target area moist.

A number of methods can be used to impregnate the porous surface of the target area with insecticide. For example, the target area material can be previously soaked in a solution of TNMT and allowed to dry, the surface of the target area can be painted with a solution of TNMT, or TNMT can be sprinkled on the target area. The insecticide is typically applied so as to be present on the target area in the amount of at least about 2.0 milligrams per square centimeter. At a minimum, the insecticide concentration on a target area will be sufficient to constitute a lethal dose when ingested by the fly. The device is periodically checked for liquid level and the fluid reservoir refilled as needed.

The Device I further contains a means of establishing fluid, 6, contact between the target area and the refillable fluid reservoir. This can be accomplished by any of a variety of conventional means which will maintain the moisture of the target area. Preferably, the target area material and/or a wicking material, 4, more preferably both, will extend downward into the fluid reservoir to a point below the fluid level present when liquid is added to the fluid reservoir, so as to draw the liquid up to the exposed surface of the target area. Examples of suitable wicking materials include felt, muslin, sponge, blotter paper or cloth; the term "wicking material" is intended to denote materials which wick whatever fluid or solution is present in said fluid reservoir.

The moisture resulting on the target area is believed to attract the flies to the device, induce their feeding response and/or promote the takeup of a poisonous amount of TNMT. Preferably, therefore, the fluid level in the wet trap is maintained so that the target area remains moist. The trap will, however, be useful for killing even if all fluid or moisture is allowed to evaporate, since the water soluble toxicant which is used is readily dissolved by the insect's saliva.

A further preferred means of attracting the flies to Devices I, II and III is by use of a sex attractant (pheromone) or food. Muscalure (cis-9-tricosene) is the sex attractant of choice for houseflies; the sex attractant can be contained in a gelatin capsule or other water-soluble container impermeable to the sex attractant. Addition of water dissolves the container, liberates the sex attractant and hence activates the device. In its most preferred mode, the device incorporates all of the above means of attracting the flies. Foodstuffs of choice include sugar or corn syrup. The foodstuff can be deposited on the target area as a glaze or sprinkled on the target area. Although it works dry as well, the most preferred trap embodiment will contain sugar on a moist target area, and a pheromone sex lure as well.

Figure 4 depicts the Device I without a base section. The collar, 2, serves to hold the target area to a backing that serves as a substrate for affixing the device to a surface or for suspending it in areas of infestation. In Figure 4, 7 is an adhesive strip for affixing the device to floors, ceilings, walls, etc. When the device is employed without a base, it typically operates dry and is preferably used with a sweet coating such as sugar which serves as an additional attractant to encourage feeding. It is also contemplated that any one particular Device I can be designed with a removable target area (lid) that can alternately be employed with or without the base section depending on need. When the device is employed without the base, the latter can be stored until needed for coupling to the target area.

The following details of Device II can be understood most conveniently by reference to Figures 5 to 8. In Figure 5, the target area, 2, of the depicted device, II, can be composed of any rope-like porous material such as bundles of fibers including natural and man-made fibers, felt, muslin, cloth, or blotter paper. The target is preferably white or yellow in dimly lit areas with a darkened background, or, black or red surrounded by white in brightly lit or light background locations. Maximum contrast between the target area and adjacent surroundings is most effective. The target area can be of any size. For best results, the surface of the target area should be sloped so that the dead flies roll or fall off to provide continuous access

to the target area by newly arriving flies. Alternatively, the Device II is designed to be hung or mounted to facilitate the shedding of dead flies regardless of the particular geometry of the device.

The target area is covered with a closely-fitting mesh, 3, which can be expandable. The mesh should allow contact by the flies on the target area and will contain openings of a size sufficient to permit the flies to land and feed on the target area surface. However, the main function of the mesh is to prevent accidental contact of the target area by humans and domestic pets and its openings are suitably limited to a size which accomplishes this function. Furthermore, the thickness of the mesh is suitably limited such that the depth of the openings will allow a fly standing on the highest portion of the mesh to reach and ingest some of the toxicant on the target area surface and not interfere with the shedding of intoxicated flies. A mesh with openings at least two millimeters on a side and one millimeter thick is preferred. The color of the mesh is preferably the same color as the target area. An optional hanger, 4, is shown in Figure 5 for suspending the device in areas of fly infestation. This hanger can be constructed from plastic monofilament line or other thin material so that it does not compete in attractiveness with the trap it suspends.

Figure 6 depicts a Device II of this invention in cross-section wherein the toxicant is coated on or soaked into core, 2, with the interface, 5, between the toxin-coated core and the protective mesh, 3, forming the target area for flies.

In Figure 7, the Device II is depicted as being hollow which serves two functions. First, this results in a materials savings for devices of larger diameters (>1.2 cm). A second function is that through the use of suitable materials of construction the hollow region can be filled with water to supply an additional measure of attractiveness to the flies. Optional features in Figure 7 include a waterproof bottom, 6, and a snap top (not shown). When the wall or target area, 7, is constructed of a semi-porous material, the hollow center, 8, of the cylinder can be filled with water. Water is released slowly through the target area wall by means of microporous polypropylene or other water permeable materials. The diameter of the cylinder formed by the target area can vary according to the application contemplated but will be sufficient to serve as a landing site for the particular insect being attracted. Typically, the solid core is of lesser diameter than the hollow one, and is usually less than 2.5 cm in diameter. The hollow core can be any diameter.

The target area 7 can be constructed from a variety of materials including paper and polymers such as polyolefins and will be covered with safety mesh, 3. The preferred materials for constructing the target area include water-proof paper or other biodegradable materials except where some water permeability is desired. The target area is preferably of a shape which would allow the device as a whole to be free-standing on level surfaces. Its configuration is preferably box-shaped, rectangular or cylindrical, with a cylindrical configuration preferred. The target area can be embossed with contrasting vertical lines and/or representations of standing flies since these are believed to aid in attracting flies to the device.

Figure 8 depicts a Device II designed to be used wet, comprising an intermediate wall, 7, between the hollow center fluid-containment vessel, 8, and the mesh, 3. When an interior wall, 7, is employed, it will act as the support for the material comprising the target area. The toxicant will be nestled on the substrate surface adjacent to the protective mesh in contact, through the fluid-permeable substrate, with whatever fluid is employed in vessel, 8.

A resealable inlet to the fluid reservoir through which liquid is added can be provided although this embodiment is not depicted in the drawings. The manner in which the inlet or portal is resealable is not critical; an item which prevents the fluid from evaporating or leaking out of said inlet or portal, such as a cork, stopper or detachable cap, is preferred.

A number of methods can be used to impregnate the porous surface of the target area with insecticide. For example, the target area can be prepared by soaking in a solution of TNMT and dried, the surface of the target area can be painted with a solution of TNMT, or TNMT can be sprinkled on the target area. The insecticide is typically applied so as to be present on the target area in the amount of at least about 2.0 milligrams per square centimeter or more. At a minimum, the insecticide concentration on a target area will be sufficient to constitute a lethal dose when ingested by the fly. The device (Figures 7 and 8) is periodically checked for liquid level and the fluid reservoir refilled as needed.

The moisture resulting on the target area is believed to attract the flies to the device, induce their feeding response and/or promote the takeup of a poisonous amount of TNMT. Preferably, therefore, the fluid level in the wet trap is maintained so that the target area remains moist. These devices will, however, be useful for killing even without fluid or moisture, since the water-soluble toxicant which is used is readily dissolved by the insect's saliva.

The following details of Device III can be understood most conveniently by reference to Figures 9 to 12. In Figure 9, the target area, 1, of the depicted Device III can be composed of any porous material such as bundles of fibers including natural and man-made fibers, felt, muslin, cloth, or blotter paper. The target area is set into lid 2 and is preferably white or yellow in dimly lit areas with a darkened background, or, black or

red surrounded by white in brightly lit or light background locations. Maximum contrast between the target area and adjacent surroundings is most effective. The target area can be of any size.

Lid 2 is attached to reservoir 3 by hinge 4 which allows movement of 2 in relation to 3. For best results, the surface of the target area should be opened so that the dead flies roll or fall off into reservoir 3 to provide continuous access to the target area by newly arriving flies. Alternatively, the Device III can be hung or mounted to facilitate the shedding of dead flies. When the container is mounted by means of adhesive strip(s) 7 to a wall or other structure, stop line 6 maintains an appropriate positional relationship between the lid/target area 1 and 2 and the reservoir component 3 of the device.

The target area is covered with a closely-fitting mesh, 5, which can be expandable. The mesh should allow contact by the flies on the target area and will contain openings of a size sufficient to permit the flies to land and feed on the target area surface. However, the main function of the mesh is to prevent accidental contact of the target area by humans and domestic pets and its openings are suitably limited to a size which accomplishes this function. Furthermore, the thickness of the mesh is suitably limited such that the depth of the openings will allow a fly standing on the highest portion of the mesh to reach and ingest some of the toxicant on the target area surface and not interfere with the shedding of intoxicated flies. A mesh with openings at least two millimeters on a side and one millimeter thick is preferred. The color of the mesh is preferably the same color as the target area.

Figure 10 depicts the Device III of Figure 9 in cross-section wherein the toxicant is coated on or soaked into target area 1 covered by safety mesh 5. The device is mounted by adhesive strip 7. The device is maintained open by stop 6 so that dead flies roll off or fall into reservoir 3.

In Figure 11, there is a slidable, friction-fit relationship between lid insert 8 and reservoir 9. When the lid is opened, target area 10 covered by safety mesh 11 is exposed to flies. An adhesive strip 12 is shown for mounting the Device III.

In Figure 12, the relationship is seen between the reservoir component 9 of the depicted device and the toxicant layer 10 and mesh covering 11 on lid insert 8. The lid can be designed to remain open by a friction fitting (not shown) with respect to reservoir 9 or by any other mechanism to tab or pin it open until time for discard.

The toxicant-retaining portion of the target area can be constructed from a variety of materials including paper and polymers such as polyolefins. The preferred materials are water-proof paper or other biodegradable materials except where some water permeability is desired. The container is preferably of a shape which would allow the device as a whole to be free-standing on level surfaces, or mounted. Its configuration is preferably box-shaped or rectangular. The target area can be embossed with contrasting vertical lines and/or representations of standing flies since these are believed to aid in attracting flies to the Device III.

A number of methods can be used to impregnate the porous surface of the target area with insecticide. For example, the target area material can be prepared by soaking in a solution of TNMT and dried, the surface of the target area can be painted with a solution of TNMT, or TNMT can be sprinkled on the target area. The insecticide is typically applied so as to be present on the target area in the amount of at least about 2.0 milligrams per square centimeter or more. At a minimum, the insecticide concentration on a target area will be sufficient to constitute a lethal dose when ingested by the fly.

A preferred means of attracting the flies is the use of a sex attractant (pheromone). Muscalure (cis-9-tricosene) is the sex attractant of choice for houseflies; the sex attractant can be contained in the target area or incorporated into the safety mesh. In its most preferred mode, the device incorporates all of the above means of attracting the flies. Foodstuffs of choice include sugar or corn syrup. The foodstuff can be deposited on the target area as a glaze or sprinkled on the target area. Although it works dry as well, the most preferred trap embodiment will contain sugar on a moist target area, and a pheromone sex lure as well. It is also contemplated that any one particular device can be designed with a removable fly-holding tray if desired.

The following Examples illustrate the devices of this invention.

## EXAMPLE 1 - DEVICE I

Assembly of a paper model fly trap begins with one 3.8 liter ice cream container (Fonda Group, Union, NJ 07083). The insert of the lid is removed and discarded. A 3.8 liter plastic polyethylene bag (Castle Bag Company, 208-T Saturn Drive, Newark, DE) lines the container. A 950 ml polyethylene wide mouth bottle (VWR Scientific, P.O. Box 626, Bridgeport, NJ 08014) is used as the main support structure of the trap. A punch is used to make holes along the side and the bottom. This allows for water drainage. The bottle is

placed in the container, open end up. A 1.9 liter plastic container (#8641A from Airlite Plastic Company, P.O. Box 649, Omaha, NE 68101) is placed upside down on the bottle. A hole 2.5 cm in diameter is cut in the bottom of the plastic container.

Diaper material (Proctor and Gamble, Cincinnati, OH, 45202) is used as the absorbent wicking material. The material is cut to a length of 35.6 cm and a width of 10.2 cm, with a 2.5 cm hole in the center. Two pieces of absorbent material are positioned at 90° angles to each other across the plastic container. The length is tucked between the ice cream container and the plastic container. A 25.4 cm diameter cellulose paper (Scott Paper Company, Philadelphia, PA 19113) is used as the toxicant vector. It is placed on top of the absorbent material. The center has a 2.5 cm diameter hole. A 26.7 cm diameter white shark skin filter paper, is placed on top of the cellulose paper. The shark skin filter paper has a central 2.5 cm diameter hole. This is the material which is dyed to produce the various colors tested. The rim of the lid of the ice cream container is placed on the container, stretching the shark skin filter paper across the surface. A gelatin capsule (Eli Lilly, Indianapolis, IN 46285) containing 100 microliters of muscalure is placed in the bottom of the device. The hanging device is constructed from a #105 rubber band (Plymouth Rubber Company, Canton, MS 02021) placed around the circumference of the ice cream container. Monofilament nylon line is cut into two 91 cm lengths. The lines cross at the bottom of the container and continue under the rubberband; finally, they are tied in a knot at the top.

## EXAMPLE 2 - DEVICE II

Assembly of a Device II began with a 91 cm section of 4.8 mm diameter braided clothesline which was dyed yellow. After the dyed clothesline was dry, a center section of the 91 cm dyed clothesline was coated by brush on all sides with this TNMT technical glaze formulation:

| | |
|---|---|
| 1. polyvinylpyrrolidone (PVP) | 0.66g |
| 2. corn syrup | 23.90g |
| 3. 50/50 ethanol/distilled $H_2O$ | 17.48g |
| 4. technical grade TNMT | 5.00g |

The corn syrup and ethanol/$H_2O$ were placed into a container with stir bar and then the container was placed on a stir plate. PVP and technical TNMT were added and the mixture was stirred until well-dissolved. A section on each end of the 91 cm clothesline was left without treatment and the clothesline was handled by the untreated areas. After the glaze formulation dried, the 91 cm yellow clothesline was threaded through a section of 6.3 mm diameter red mesh poly-net (Item #0403 from NSW Corp., 530 Gregory Avenue, N.E., Roanoake, VA 24016). Then, 100 microliters of the fly attractant, cis-9-tricosene (muscalure), was placed along the two-foot treated section of rope/mesh with a pipet tip as evenly as possible.

This device has been found particularly useful in killing flies in areas experiencing high levels of fly populations, such as dairy barns, chicken houses or other confined animal quarters. It is characterized by equal accessibility by insects to all sides/surfaces of the target area and by its suitability for placement where bulkier devices comprising housing and containment structures could not be located. Individual devices have been found effective in killing hundreds of flies per day.

## EXAMPLE 3 - DEVICE II

A yellow paper-wound core approximately 1.9 cm in diameter and 76 cm long obtained from SONOCO Inc. (Hartsville, SC) was coated by brush with a TNMT glaze formulation described below:

| | |
|---|---|
| polyvinylpyrrolidone (PVP) | 0.66g |
| corn syrup | 23.90g |
| 50% v/v ethanol/water | 17.48g |
| TNMT technical | 5.10g |

The coated core was then allowed to air dry. A section of red close mesh poly-net #0403 (NSW Corp.) was stretched over the tube along its entire length. A loop of monofilament line was affixed to one end and secured with hot melt adhesive.

## EXAMPLE 4 - DEVICE III

Assembly of the box model flytrap begins with formulation of the glaze toxicant (below). Paint the formulation on a 10.2 cm square of black construction paper until the surface is uniformly damp. After the glaze has dried, 12 to 24 hours, a piece of 10.2 cm square clear plastic netting is glued to the treated paper. The flat sheet of low density polyethylene netting is available from NSW Corporation, 530 Gregory Avenue NE, Roanoke, VA 24016. Once the paper/netting square is set, it can be glued to the inside half of the clam shell box available from Keyes Fibre Company, 3003 Summer Street, P. O. Box 3861, Stamford, CT 06905. A piece of monofilament line is glued to the top and bottom halves so that when the clam shell box is opened, the bottom half should be supported by the monofilament line and be at a 90 degree angle from the top half. Cut two pieces of foam adhesive tape about 9 cm long. Place the foam on the backside top half of the clam shell box. Place 29 microliters of muscalure on the center of the paper/netting square.

| Toxicant Formulation: | |
|---|---|
| polyvinylpyrrolidone (PVP) | 0.66g |
| corn syrup | 23.90g |
| 50% ethanol/water, V/V | 17.40g |
| technical grade toxicant (TNMT) | 5.00g |

During toxicant formulation, the combined corn syrup and ethanol solutions are stirred while the PVP, then toxicant, are added. Stirring is continued until the solids are dissolved.

This device is particularly useful in killing flies in home and business environments including restaurants, stores, and the like. It is characterized by good accessibility by insects and suitability for placement where devices comprising bulky housing and containment structures could not be located.

### Toxicant

Certain physical and chemical properties of nitromethylene heterocycles are known. For example, insecticidal activity of TNMT against the house fly (Musca domestica) was determined by directly spraying the insects in a wind tunnel. The compound has the formula:

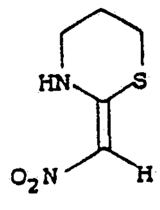

and a toxicity quotient of 161 vs. 100 for ethyl parathion. The physical properties of TNMT are as follows:

| | |
|---|---|
| Melting point, °C<br>Solubility, % weight/volume | 78<br>Water, 20<br>Acetone, 7 |
| Hydrolytic Stability (half life) | 3 hours at pH 1.1<br>over 3 months at pH 7.0 |
| Photochemical Stability (half life, 350 nm simulated sunlight, 100 ppm) | Water, 10 minutes<br>$CH_2Cl_2$, 1 minute |

The structure of the N-formyl derivative of TNMT is as follows:

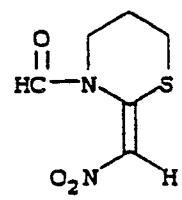

Pheromones and Attractants

Pheromones or attractants may be classified as sex, food, or oviposition lures. Additional classifications or subclassifications include trail pheromones, aggregating and other pheromones. Broadly defined, a sex pheromone is an odor released by one member of the species which attracts the opposite member for the purpose of mating. The presence of sex pheromones has been demonstrated in most orders of insects and they can be produced by the male or female of the species. In many cases, it is the female which produces the attractant. A large number of pheromones that are useful in the devices of this invention have been identified and created synthetically including those listed in Table 1.

TABLE 1

| Compounds | Insect |
|---|---|
| pentanoic acid | sugar beet wireworm<br>limonius californious |

| | |
|---|---|
| trans-3,cis-5-tetra-decadienoic acid | black carpet beetle *Attagenus megatoma* |
| cis-7-dodecenyl acetate | cabbage looper *Trichoplitha ni* |
| cis-8-dodecenyl acetate | oriental fruit moth *Grapholitha molesta* |
| cis-11-tetradecenyl acetate | red-banded leaf roller *Argyrotaenia velutinana* |
| cis-9,trans-12-tetra-decadienyl acetate and cis-9-tetra-decenyl acetate | southern armyworm *Prodenia eridenia* |
| cis-7,8-epoxy-2-methyloctadecane undecanal | gypsy moth *Porthetria dispar* |
| undecan-1-al | greater wax moth *Galleria mellonella* |
| cis-2-isopropenyl-1-methylcyclo-butaneethanol | boll weevil *Anthonomus grandis* |
| 1,5-dimethyl-6,8-dioxabicyclo-3,2,1-octane | southern pine beetle *Dendrooctonus frontalis* |
| 2-methylheptadecane | tiger moths *Holomelina aurantiaca* complex |
| trimedlure | mediterranean fruit fly *Ceratitis Capitata* |
| cuelure | melon fly *Dacus Cucurbitae* |
| cis-9-tricosene | housefly *Musca domestica* |

## Claims

1. A device for killing insects, the device selected from the group consisting of:
(I) a device comprising:
(a) a sloped and porous toxin-containing target area which is fluid-permeable and self-supporting, and
(b) an optional base section, one that has no insect-containment cavity, whereby the target area continuously sheds dead insects to prevent occlusion of the device;
(II) a device comprising:
(a) a toxin-containing target area, and

(b) a mesh covering (a) to protect nontarget organisms from contact with the toxin; and
(III) a device comprising:
(a) a toxin-containing target with an optional mesh covering and an optional attractant for the insects; and
(b) a reservoir closable with respect to the target so that the target is not exposed and openable with respect to the target so that the target is exposed, the reservoir serving to hold insects killed by contact with the target area;
the toxin in each of Devices I, II and III being an insecticidally effective amount of a tetrahydro-2-(nitromethylene)-2H-1,3-thiazine.

2. A device according to Claim 1 comprising Device I.

3. A device according to Claim 2 having a target area of about 100 $cm^2$ or greater.

4. A device according to Claim 2 employing a grill over the target area.

5. A device according to Claim 2 having a target area sloped down at an angle of at least 30°.

6. A device according to Claim 2 containing wicking material to wick fluid to the target area.

7. A devlce according to Claim 6 containing fluid in the base section.

8. A device according to Claim 1 comprising Device II.

9. A device according to Claim 8 in the shape of a cylinder wherein the mesh comprises an expandable plastic net.

10. A device according to Claim 1 comprising Device III.

11. A device according to Claim 10 wherein (a) and (b) are movable with respect to one another and closable in the shape of a clamshell box.

12. A device according to Claim 1 employing tetrahydro-2-(nitromethylene)-2H-1,3-thiazine as the toxin.

13. A device according to Claim 1 employing the N-formyl derivative of tetrahydro-2-(nitromethylene)-2H-1,3-thiazine as the toxin.

14. A device according to any one of Claims 1 to 13 employing at least one member of the group consisting of an insect sex attractant and a feeding stimulant.

Fig. 3

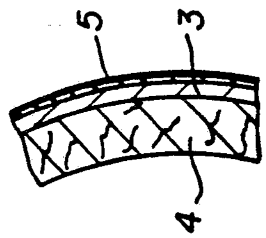


Fig. 2

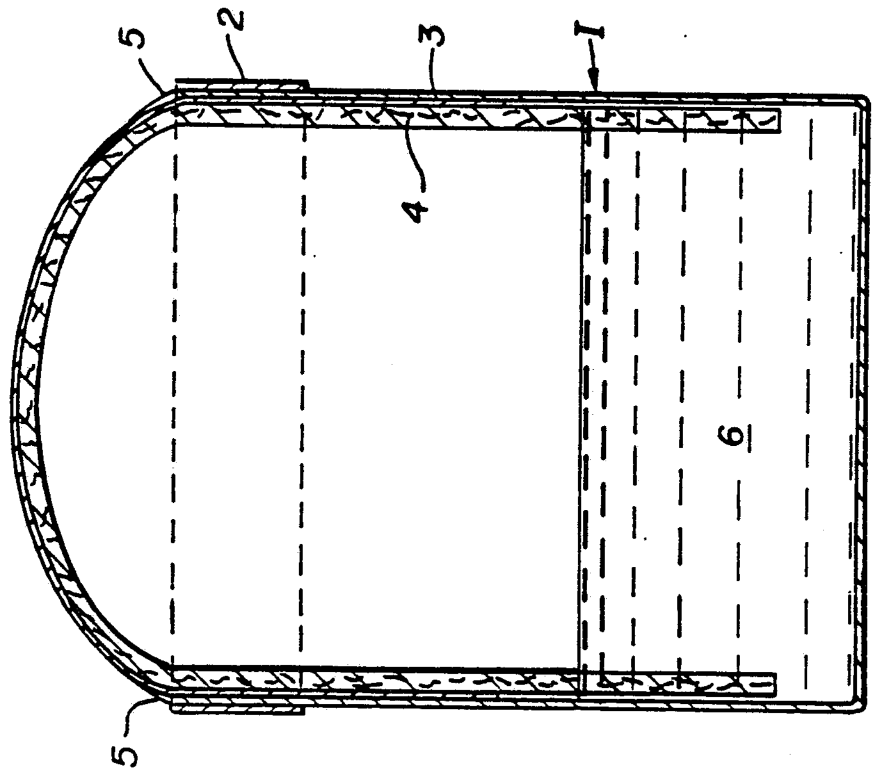


Fig. 1

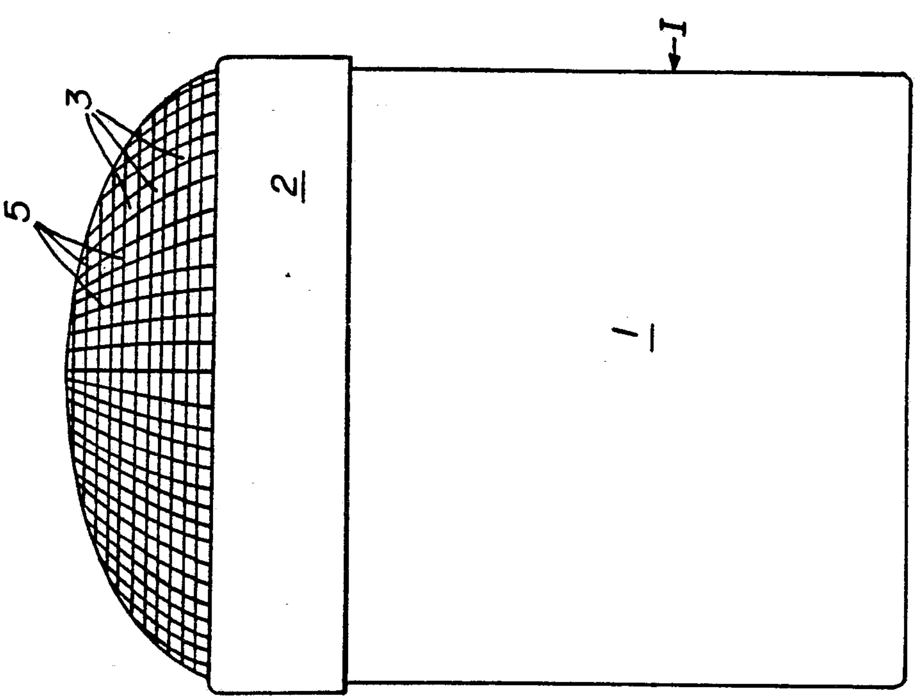

Fig. 5

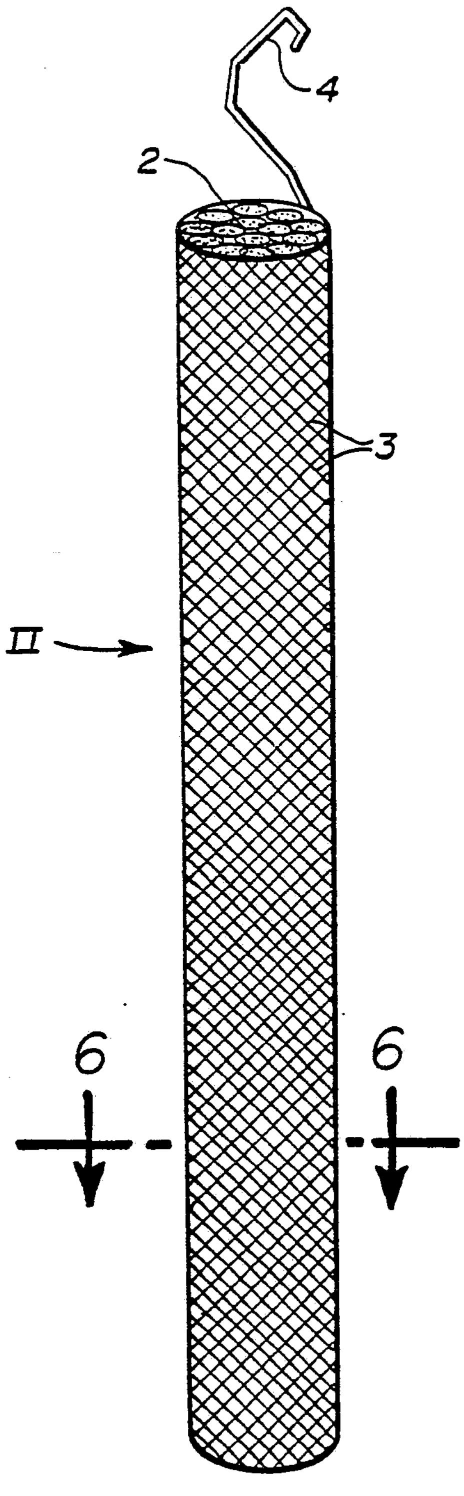


Fig. 4

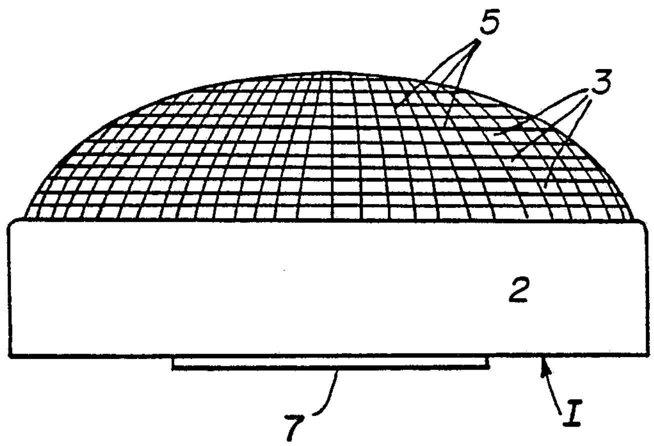


Fig. 6

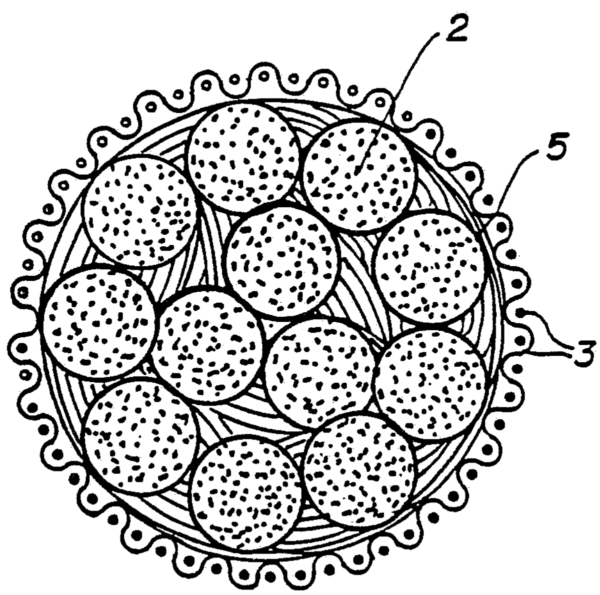

Fig. 7

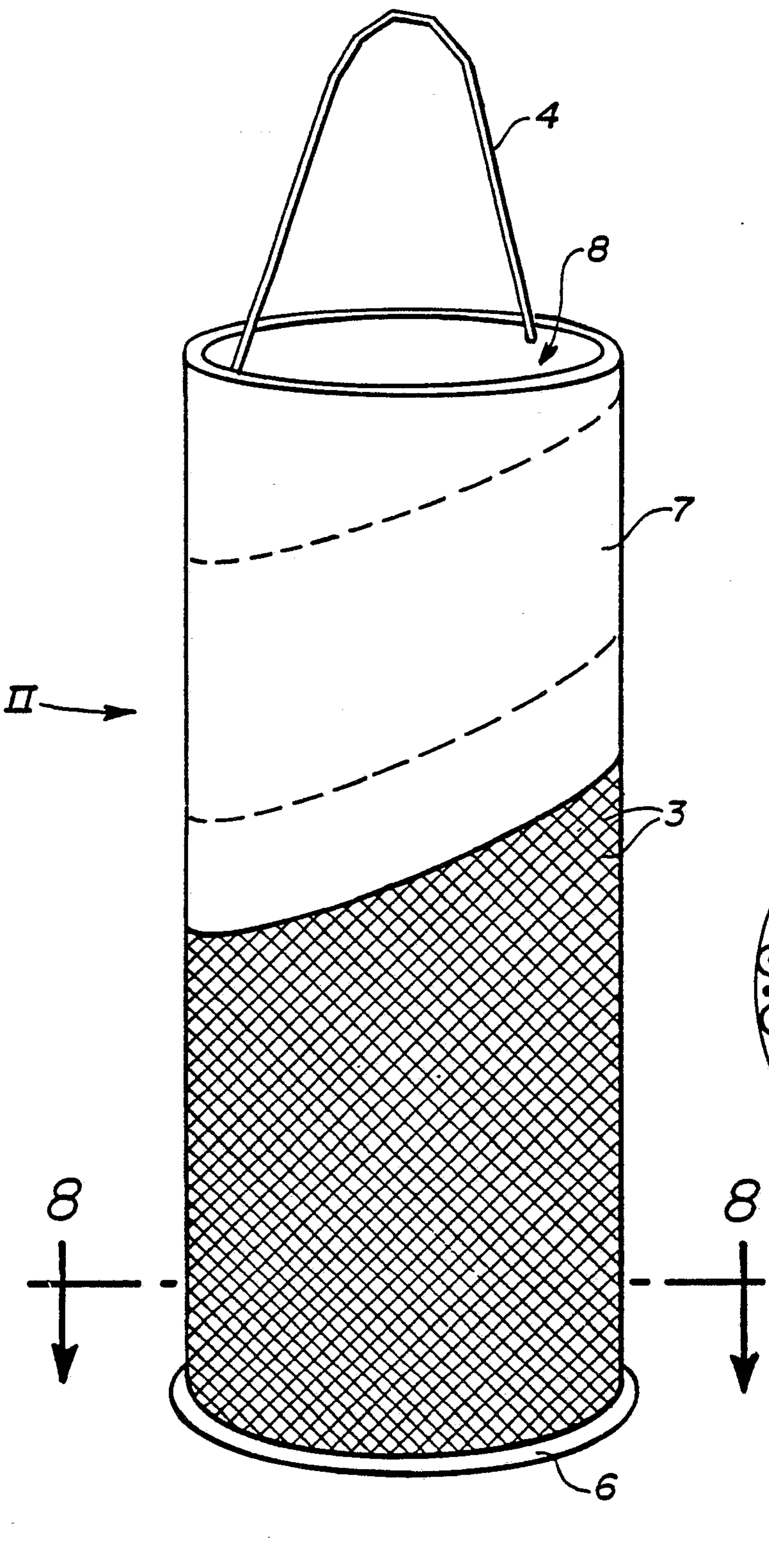


Fig. 8

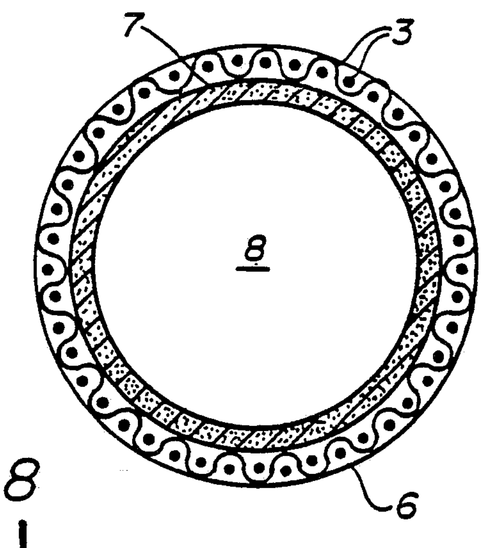

Fig. 9

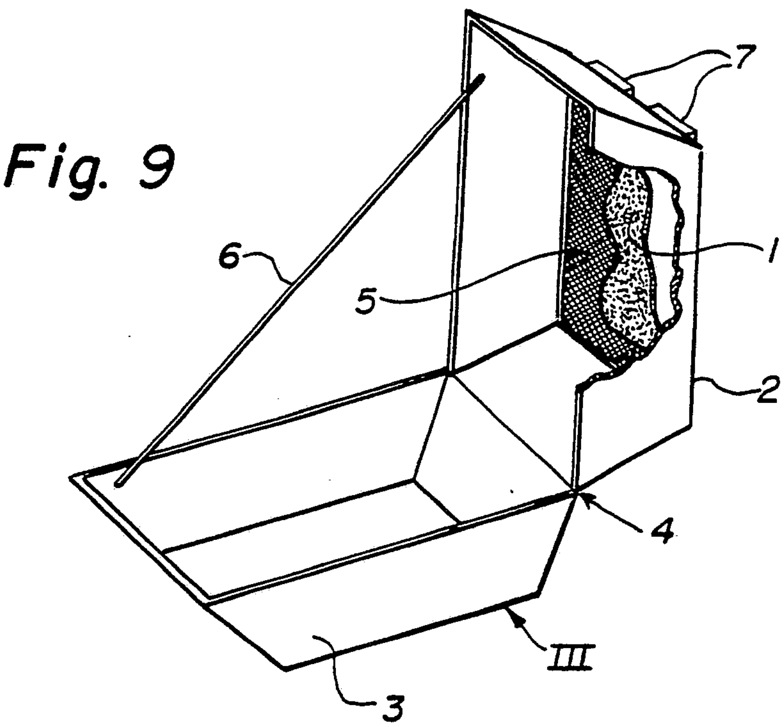


Fig. 10

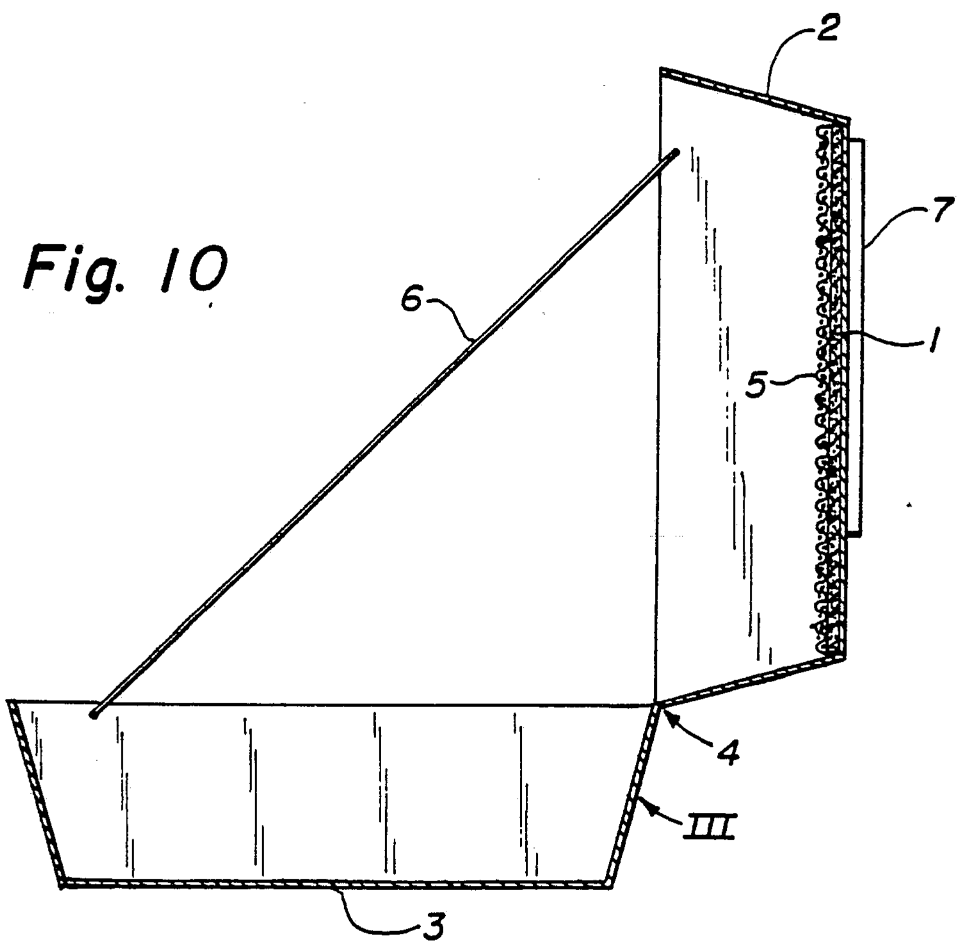

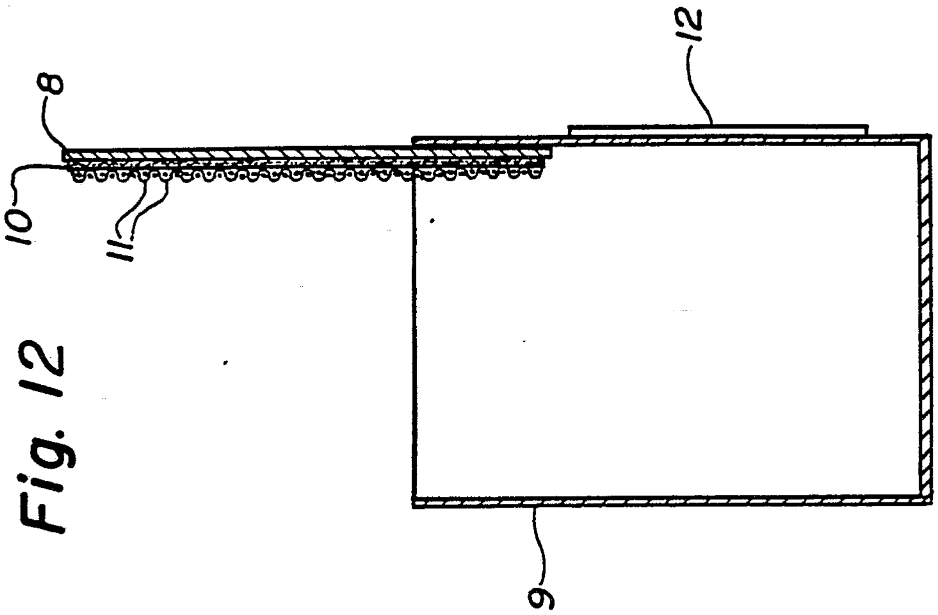


Fig. 12

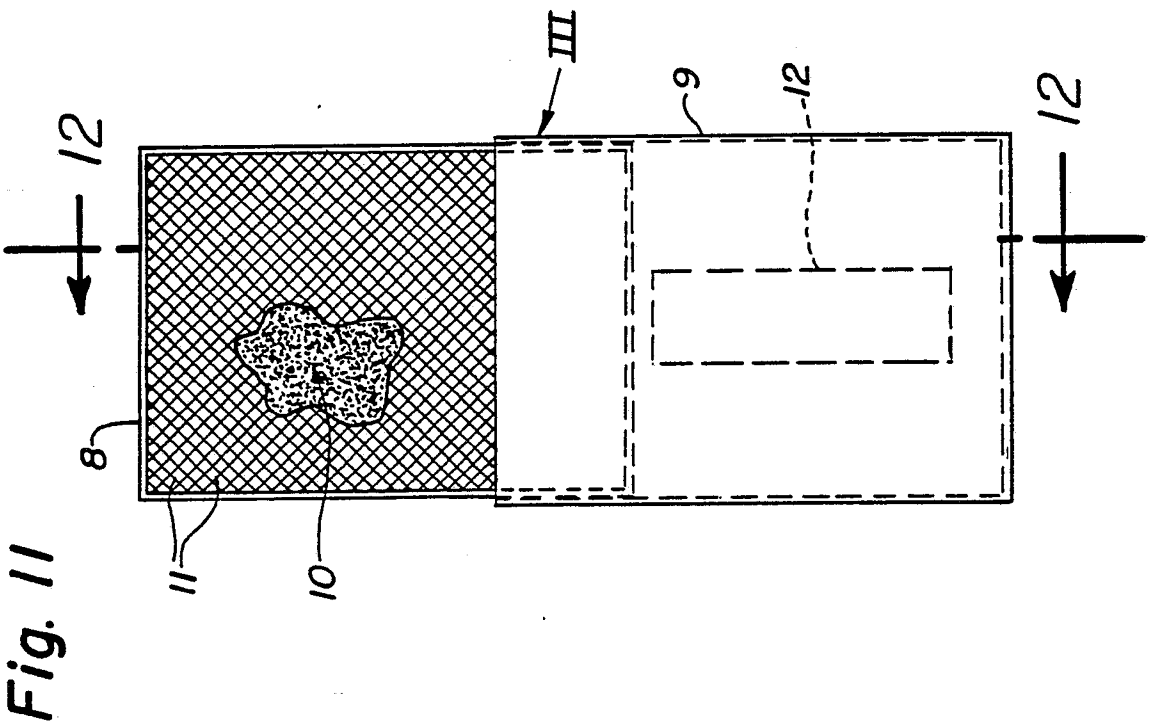


Fig. 11

European Patent Office

# EUROPEAN SEARCH REPORT

Application Number

EP 90 30 0354

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | US-A-4310985 (J.P.FOSTER ET AL)<br>* column 2, lines 16 - 63; figures 1-5 *<br>* column 3, line 37 - column 4, line 4 *<br>* column 4, line 64 - column 5, line 4 *<br>* column 6, lines 3 - 13 *<br>* column 6, lines 53 - 56 *<br>* column 8, line 64 - page 9, line 13 *<br>--- | 1-10, 12, 14 | A01M1/20 |
| D,A | US-A-4501742 (M.HARRIS)<br>* column 1, lines 21 - 39 *<br>--- | 13 | |
| A | US-A-2956366 (R.WIESMANN)<br>* column 1, lines 35 - 55; figure 1 *<br>--- | 1-3 | |
| A | FR-A-1571436 (R.E.MULET)<br>--- | | |
| A | DE-U-8809523 (A.GEIER)<br>----- | | |

TECHNICAL FIELDS SEARCHED (Int. Cl.5)

A01M
A01N

The present search report has been drawn up for all claims

| Place of search | Date of completion of the search | Examiner |
|---|---|---|
| THE HAGUE | 13 MARCH 1990 | NEHRDICH H.J |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document